# EUROPEAN PATENT APPLICATION

(11) **EP 0 644 447 A1**
(43) Date of publication of application: **22.03.1995**
(21) Application number: 94306822.1
(22) Date of filing: 19.09.1994
(51) Int. Cl.: G02B 26/02

(54) **Mechanical optical switch**

(30) Priority: 17.09.1993 JP 231420/93
(71) Applicant: SEIKO INSTRUMENTS INC., Chiba-shi, Chiba 261 (JP); NIPPON TELEGRAPH AND TELEPHONE CORPORATION, Tokyo (JP)
(72) Inventor: Funanami, Yukiya, c/o Seiko Instruments Inc., Chiba-shi, Chiba 261 (JP); Suzuki, Nobuo, c/o Seiko Instruments Inc., Chiba-shi, Chiba 261 (JP); Tsuchiya, Akira, c/o Seiko Instruments Inc., Chiba-shi, Chiba 261 (JP); Tanuma, Seiichi, c/o Seiko Instruments Inc., Chiba-shi, Chiba 261 (JP); Yoshikawa, Tomohiro, c/o Seiko Instruments Inc., Chiba-shi, Chiba 261 (JP); Majima, Hideo, c/o Seiko Instruments Inc., Chiba-shi, Chiba 261 (JP); Nagaoka, Shinji, c/o Nippon Telegraph &, Chiyoda-ku, Tokyo (JP)
(74) Representative: Sturt, Clifford Mark

(57) **Abstract**

A single moveable optical fibre 101 or a first pair of optical fibres 1,2 are held and fixed to a supporting member 51 in a cantilever form. Oppositely connected thereto is a second pair of optical fibres 3,4 that are fixed to a square hole 53 of the alignment material. Either two magnetic bodies 110a, 110b are attached to the single moveable optical fibre or a magnetic body 11, 12 is adhered to each of the first pair of optical fibres. Around the magnetic bodies, there are aligned hollow solenoid coils, 21, 22 and one pair or two pairs of permanent magnets 31a, 31b, 32a and 32b respectively which are oppositely aligned so as to have opposite polarities to each other.

The single moveable optical fibre or the first pair of optical fibres can be switched to be connected to one or the other of the second pair of optical fibres to form a 1 X N or 2 X 2 optical switch.

## Description

The present invention relates to a switch. The present invention relates in particular, but not exclusively, to a mechanical optical switch for an optical fibre direct driving type which is applied to optical communications and other such applications.

A mechanical optical switch has a structure for enabling an optical path to be switched directly driving an optical fibre. Such a mechanical optical switch is characterised by its simple structure and advantageously achieves little insertion loss, miniaturisation, and consumes little driving electric power.

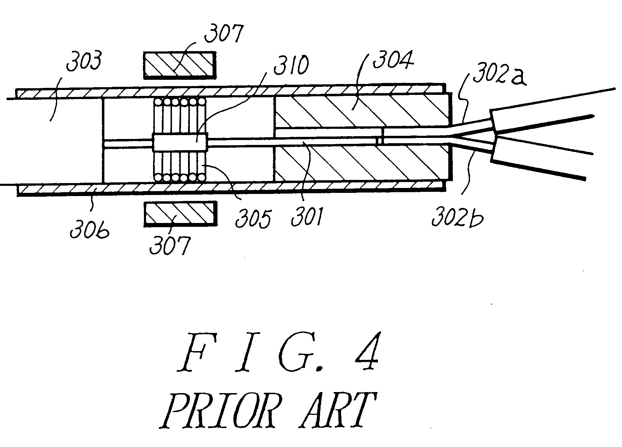

A number of switch structures of various types have been proposed in the past. Fig. 4 is a sectional view showing a conventional optical switch of the optical fibre direct driving type. The conventional optical switch includes: a movable optical fibre 301 whose core line is fixed to a cylindrical tube 303 in a cantilever form; a magnetic body 310, having a desired magnetic characteristic, being adhered to a surface of the movable optical fibre 301 in the vicinity of a tip thereof; a hollow solenoid coil 305 for inverting the magnetic poles of both ends of the magnetic body 310; a pair of permanent magnets 307 which apply magnetic attraction to the magnetic body 310 in a direction vertical to an optical axis; two fixed optical fibres 302a, 302b fixed to a square hole formed within a columnar member 304; and a cylindrical sleeve 306 which aligns and holds the cylindrical tube 303 and the columnar member 304, and on which the solenoid coil 305 and the permanent magnets 307 are fixed respectively.

This switch operates as follows. The movable optical fibre 301 is magnetically attracted to one of the pair of permanent magnets 307 according to the magnetic poles of both the ends of the magnetic body 310. The tip of both the ends of the magnetic body 310. The tip of the movable optical fibre 301 optically combines with one of the two fixed optical fibres 302 and 302b in a corner of the square hole formed within the columnar member 304. The solenoid coil 305 is energised and a magnetic field along the optical axis is applied to the magnetic body 310 to invert the magnetic poles of the magnetic body 310. Then, the movable optical fibre 301 is attracted toward the other permanent magnet, thereby optically combining with the other fixed optical fibre. Even when a current is not supplied, the magnetic body 310 can remain combined with one of the fixed optical fibres 302a and 302b because the magnetic body 310 is magnetically attracted to the permanent magnet 307, thereby obtaining a switching operation of the latching type. Such a structure is disclosed in, for example, the Japanese Patent Publication No. Sho 64-11925.

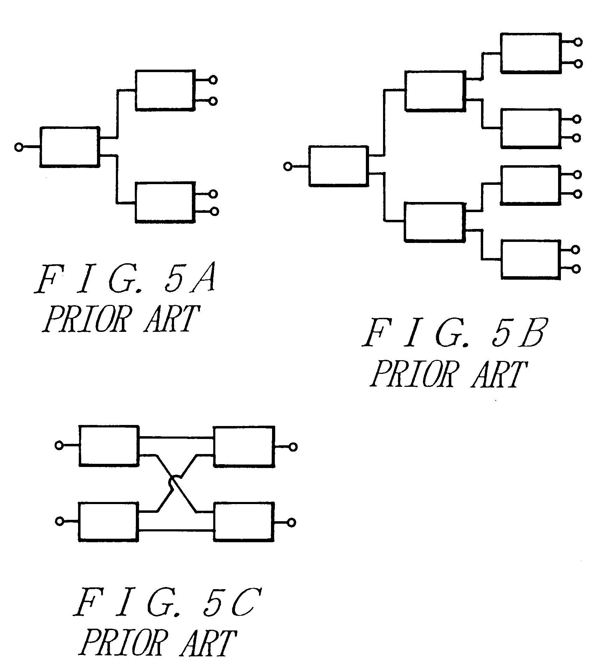

Thus, these types of conventional mechanical optical switches have one port on an input-side and two ports on an output-side (known as a 1X2 optical switch), which has the following problem. A plurality of 1X2 optical switches are necessary to form a 1XN mechanical optical switch (hereinafter referred to as "1XN optical switch") or a 2X2 mechanical optical switch (hereinafter referred to as "2X2 optical switch") respectively. For instance, in order to form a 1X4 optical switch and a 1X8 optical switch, generally three and seven 1X2 optical switches are connected in a branch-off structure as shown in Fig. 5(a) and 5(b) respectively. In order to form a 2X2 optical switch, it is necessary to connect 1X2 optical switches in a branch-off and cross structure as shown in Fig. 5(c).

Accordingly, an object of the present invention is to provide a compact 1XN optical switch and a compact 2X2 optical switch with little loss by a simple element structure in order to solve the problem mentioned above.

According to the present invention there is provided an optical switch for switching between optical fibres comprising:
a first moveable optical fibre;
a first magnetic body attached to said first moveable optical fibre;
means for attracting or repelling said magnetic body for enabling said first moveable optical fibre to be aligned with a first or a second optical fibre; characterised by
a second magnetic body attached to said first moveable optical fibre and in which said attracting or repelling means enables said magnetic body to be attracted or repelled for enabling said first moveable optical fibre to be aligned with at least one further optical fibre.

Also according to the present invention there is provided an optical switch for switching between optical fibres comprising:
a first moveable optical fibre;
a first magnetic body attached to said first moveable optical fibre;
means for attracting or repelling said magnetic body for enabling said first moveable optical fibre to be aligned with a first or a second optical fibre; characterised by
a second moveable optical fibre;
a second magnetic body attached to said second moveable optical fibre; and
in which said attracting or repelling means enables said second magnetic body to be attracted or repelled for enabling said second moveable optical fibre to be aligned with the other of said first or a second optical fibre.

The present invention provides a 1XN optical switch with a little loss by composing the optical switch of:
1) a movable optical fibre whose core line is fixed in a cantilever form, a plurality of magnetic bodies being discontinuously adhered in a vicinity of a tip of the movable optical fibre in a lengthways direction;
2) a plurality of fixed optical fibres which are fixed in a plurality of concaves respectively so that one of tips thereof and the tip of the movable optical fibre are opposite to each other;
3) a plurality of solenoid coils provided so as to surround the plurality of magnetic bodies; and
4) a plurality of permanent magnets which are arranged at an equivalent angle respectively on a surface of coaxial cylinder having the movable optical fibre as a centre, a pair of the permanent magnets that are arranged in opposite to each other through the solenoid coil along an extended direction of each of the magnetic bodies and have opposite polarities to each other being considered as a basic element.

Further, the present invention provides a compact 2X2 optical switch with a little loss by being composed of:
1) two movable optical fibres whose core lines are fixed in a cantilever form, which have magnetic bodies respectively fixed in a vicinity of tips of the movable optical fibres themselves, and which are arranged in parallel with each other;
2) two fixed optical fibres which are fixed in a square hole provided within a columnar member so that tips of the movable optical fibres and tips of themselves are opposite to each other;
3) two hollow solenoid coils provided for inverting magnetic poles of the two magnetic bodies separately;
4) two pairs of permanent magnets for applying magnetic attraction to the respective magnetic bodies in a direction vertical to an optical axis and for moving separately the two movable optical fibres in opposite directions in an arc respectively.

In the 1XN optical switch with the above structure, a plurality of magnetic bodies are attracted to or repelled by the pair of permanent magnets of the permanent bodies. Thus, the tip of the movable optical fibre moves within the plurality of concaves and rests opposite to the desired fixed optical fibre. Further, in the 2X2 optical switch, the two magnetic bodies are attracted to or repelled by the permanent magnets of the magnetic bodies. Thus, the tips of the two movable optical fibres rest opposite to the two desired fixed optical fibres that are fixed in the square hole.

Embodiments of the present invention will now be described with reference to the accompanying drawings, of which:
Fig. 1 is a sectional view showing a structure of the 1X4 optical switch according to the present invention;
Fig. 2 is a perspective view of the 1X4 optical switch according to the present invention;
Fig. 3 is a perspective view of the 1X6 optical switch according to the present invention;
Fig. 4 is a sectional view of the conventional 1X2 optical switch;
Figs. 5 (a), (b) and (c) are basic structural views of the 1XN optical switches and the 2X2 optical switch in which a plurality of the conventional 1X2 optical switches of optical direct driving type are connected;
Fig. 6 is an explanatory view showing the arrangement and operation of the main elements of the first embodiment of typical structures of the inventive 2X2 optical switch;
Fig. 7 is a perspective sectional view showing the first embodiment of the inventive 2X2 optical switch;
Fig. 8 is a perspective appearance view showing the first embodiment of the inventive 2X2 optical switch;
Fig. 9 is a sectional view showing a relative arrangement of fixing portions of the first, the second, the third and the fourth optical fibre in Fig. 7;
Figs. 10 (a) and (b) are sectional views of the alignment member seen from the sides of the third and the fourth optical fibre respectively for explaining the operation of switching between the first and the second optical fibre;
Fig. 11 is a perspective view showing an embodiment of the supporting member in the 2X2 optical switch according to the present invention;
Fig. 12 is a perspective view showing an embodiment of the alignment member in the 2X2 optical switch according to the present invention;
Fig. 13 is an explanatory view showing an arrangement and function of the chief elements in the second embodiment of typical structures of the 2X2 optical switch according to the present invention;
Fig. 14 is a perspective sectional view showing the second embodiment of the 2X2 optical switch of the present invention;
Fig. 15 is a perspective appearance view showing the second embodiment of the 2X2 optical switch of the present invention;
Fig. 16 is an explanatory view showing an alignment and function of main elements in the third embodiment of typical structures of the inventive 2X2 optical switch;
Fig. 17 is a perspective sectional view showing the third embodiment of the inventive 2X2 optical switch; and
Fig. 18 is a perspective appearance view showing the third embodiment of the inventive 2X2 optical switch.

Hereinafter, embodiments of the present invention will be explained referring to drawings.

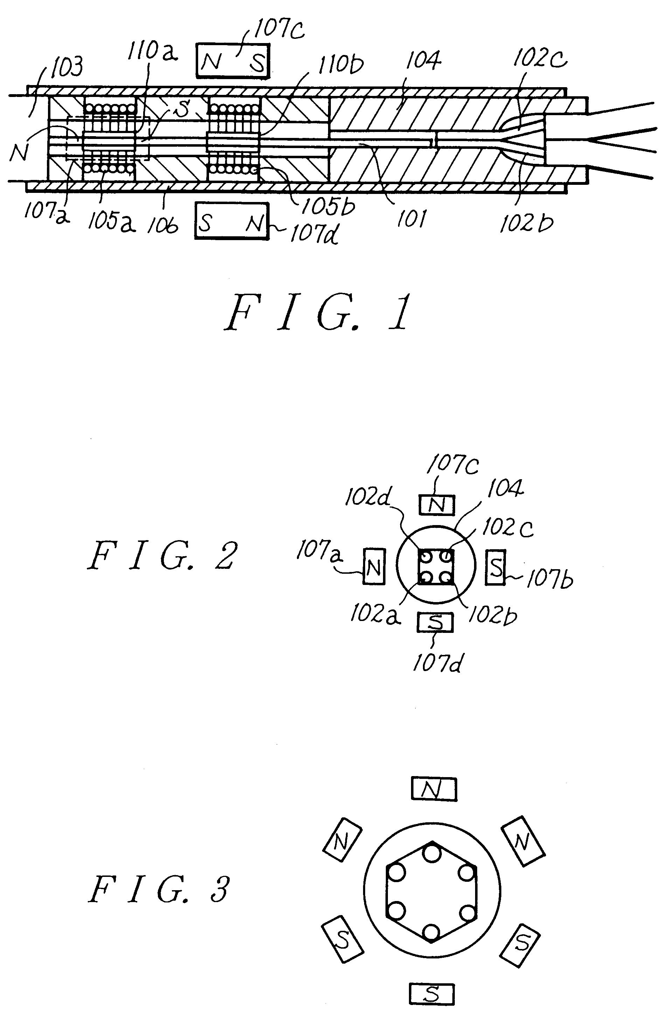

Fig. 1 is a sectional view of one of the embodiments of the present invention showing a 1X4 optical switch. Fig 2. is a perspective view showing the magnets and fixed optical fibres that are shown in Fig. 1 are arranged in a circumferential direction. A movable optical fibre 101 is provided, which is fixed to a tip of a cylindrical sleeve 106 in a cantilever form by a cylindrical tube 103. Two magnetic bodies 110a and 110b are disposed in the cylindrical tube 103. They are pipe shape and are made of a soft-magnetic material such as an Fe-Ni alloy. Solenoid coils 105a and 105b are provided so as to surround the magnetic bodies 110a and 110b. A pair of permanent magnets 107a and 107b are aligned in parallel with the magnetic body 110a and at an equal distance, oppositely to each other through the solenoid coil 105a so as to have opposite magnetic directions to each other. A pair of permanent magnets 107c and 107d are aligned in parallel with the magnetic body 110b and at an equal distance, oppositely to each other through the solenoid coil 105b so as to have opposite magnetic directions to each other. Moreover, there are provided four fixed optical fibres 102a, 102b, 102c and 102d, one of whose tips is opposite to a tip of the movable optical fibre 101, and which are fixed in a corner of a square hole within a columnar member 104 fixed within the cylindrical sleeve 106.

Next, operation of the switch will be explained. There will be given an explanation of a case when the tip of the movable optical fibre 101 is opposite to the fixed optical fibre 102a in Fig. 2 and is switched so as to be opposite to the fixed optical fibre 102c. In order to make the tip of the movable optical fibre 101 opposite to the fixed optical fibre 102c, the magnetic body 110a is moved in a three-dimensional direction in Fig. 1 (to the right in Fig. 2), and the magnetic body 110b is moved upward in Fig. 1.

In order to move the magnetic body 110b upward in Fig. 1, a pulse current flows through the solenoid coil 105b so that a side of the magnetic body 110b corresponding to an S pole of the upper permanent magnet 107c (a right side in Fig. 1) becomes an N pole. Then, the magnetic body 110b is polarised, repels the permanent magnet 107d and is attracted by the permanent magnet 107c, thereby moving upward. The magnetic body 110a can also be moved to a predetermined position by a similar operation to that for the magnetic body 110b.

As mentioned above, the movable optical fibre 101 optically combines with one of the fixed optical fibres by combining polarising directions of the magnetic bodies 110a and 110b. Even when a current is not supplied, because the magnetic bodies 110a and 100b are magnetically attracted by either the permanent magnets 107a or 107b, and 107c or 107d respectively, the movable optical fibre 101 can remain combined with one of the four fixed optical fibres, thereby obtaining a switching operation of the latching type.

Fig. 3 is a perspective view showing an alignment relationship in a circumferential direction between the fixed optical fibres and the permanent magnets when forming a 1X6 optical switch. This can be realised by providing three pairs of permanent magnets and aligning a fixed optical fibre at each of the corners in an equilateral hexagonal hole. Needless to say, by aligning N fixed optical fibres and the pairs of permanent magnets in a positional relationship, a desired 1XN optical switch can be formed. Odd numbers, n, may be formed either by an odd numbered polygon hole with n+1 permanent magnets or an n+1 numbered polygon and n+1 associated permanent magnets with one corner absent of a fixed fibre.

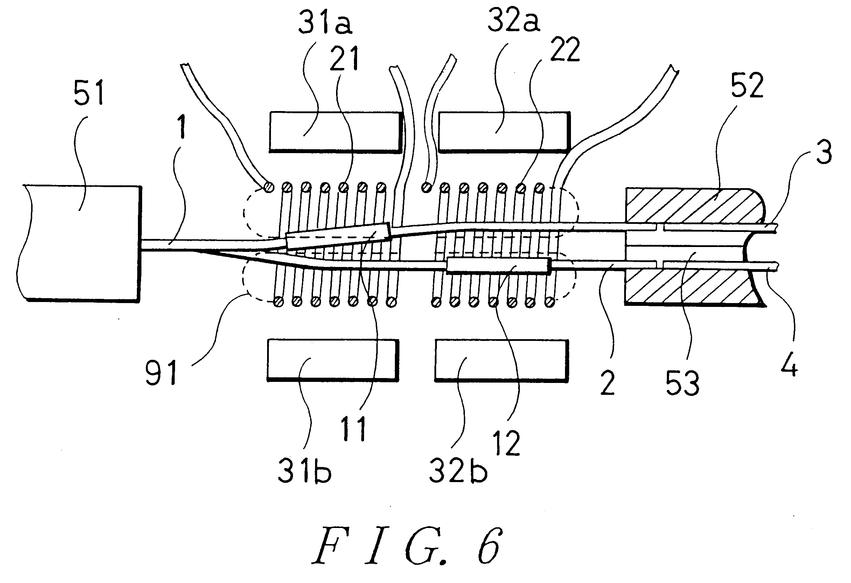

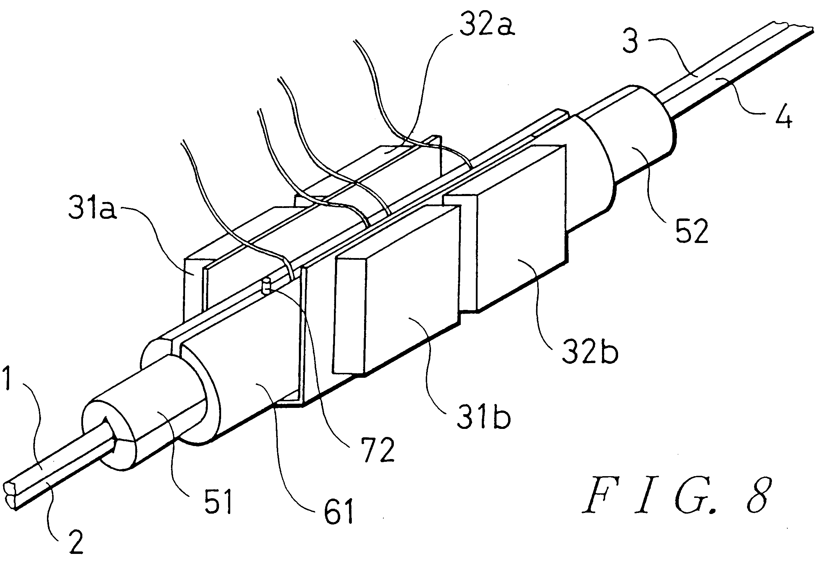

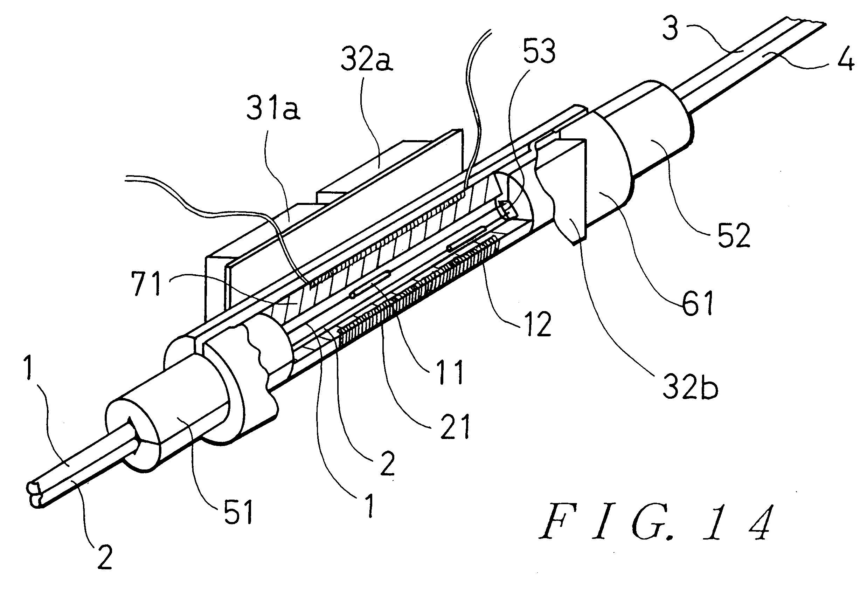

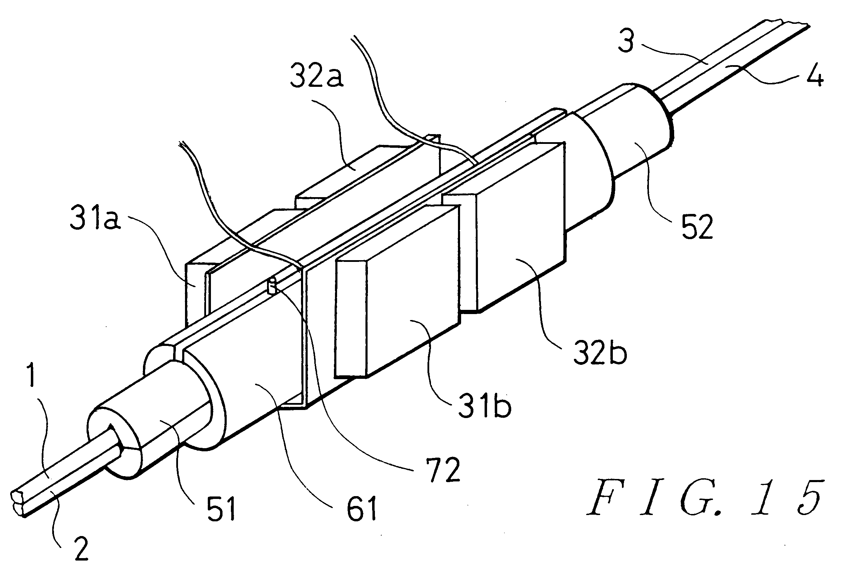

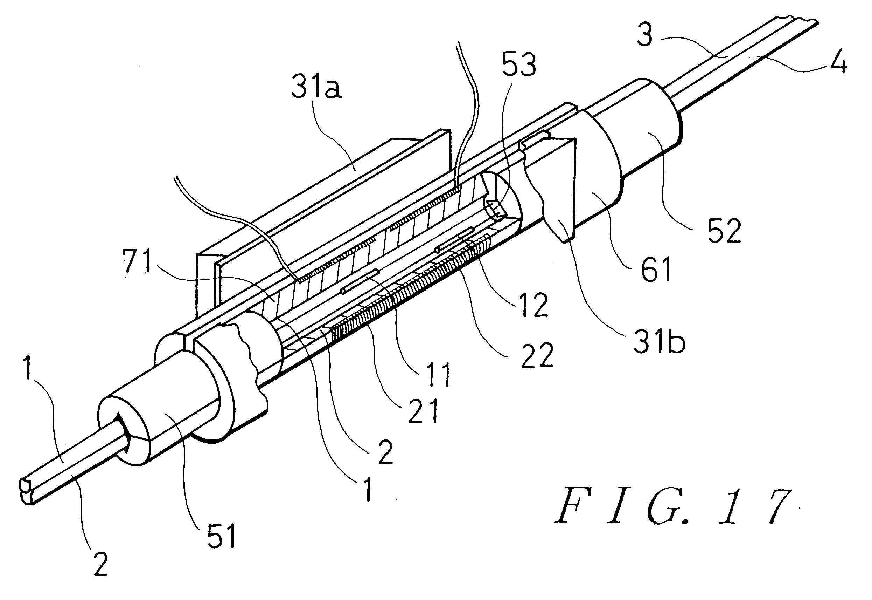

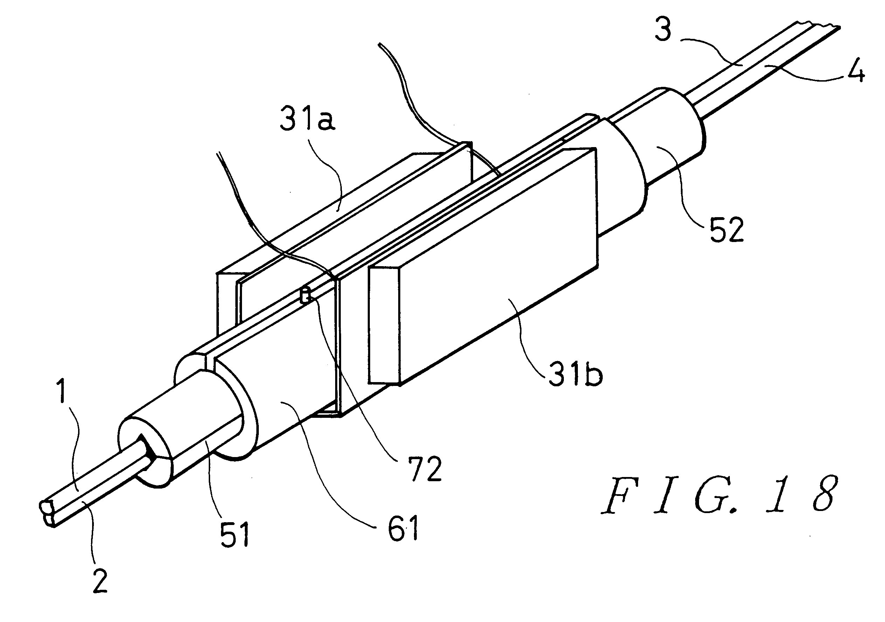

Next, embodiments of a 2X2 optical switch according to the present invention will be explained referring to the drawings and in particular, to Figs. 6 to 18. All of the embodiments 1 to 3 disclose 2X2 optical switches, each of which has an input/output port including a first optical fibre 1 and a second optical fibre 2 as one pair and an input/output port including a third optical fibre 3 and a fourth optical fibre 4 as one pair. The first optical fibre 1 connects with either the third optical fibre 3 or the fourth optical fibre 4, and the second optical fibre 2 connects with the other of the third optical fibre 3 or the fourth optical fibre 4 which does not connect with the first optical fibre 1. Figures 6, 7 and 8 show the first embodiment of the present invention.

The first embodiment includes the following elements: a supporting member 51 having a face to which the first optical fibre 1 and the second optical fibre 2 fixed in a cantilever form, the first and second optical fibres also have magnetic bodies 11 and 12 adhered thereto respectively; hollow solenoid coils 21 and 22 are provided for inverting the magnetic poles of both ends of the magnetic bodies 11 and 12 respectively; two pairs of permanent magnets 31a and 31b, and 32a and 32b for applying magnetic attraction to the magnetic bodies 11 and 12; and a cylindrical sleeve 61 for aligning and holding an aligning member 52, the third and the fourth optical fibre 3 and 4 are fixed in a square hole in a centre thereof, and for fixing each of the three elements.

The first and the second optical fibres 1 and 2 are movable fibres and are held in a centre of the supporting member 51 in parallel with each other and in a cantilever form. The desired magnetic bodies 11 and 12 are adhered respectively in the vicinity of the tips of the first and the second optical fibre 1 and 2 and in different positions so that the two magnetic bodies 11 and 12 do not overlap in respective lengthways directions of the optical fibres 1 and 2. In other words, the magnetic body 11 is within a magnetic field of the pair of permanent magnets 31a and 31b, and the magnetic body 12 is within a magnetic field of the other pair of permanent magnets 32a and 32b.

The hollow solenoid coils 21 and 22 are arranged so as to surround the magnetic bodies 11 and 12 respectively, and both coils are wound in the same direction. In this state, if a driving current flows to both terminals of the hollow solenoid coil 21 and a driving current of an opposite direction flows to both terminals of the hollow solenoid coil 22, the two magnetic bodies 11 and 12 are magnetised in opposite directions to each other. The pairs of permanent magnets 31a and 31b, and 32a and 32b are aligned so that magnetic poles of both pairs are approximately in parallel with the optical fibres 1 and 2; so that magnetic lines generated between the permanent magnets 31a and 31b, and 32a and 32b respectively are approximately in parallel with a plane including portions of the third and the fourth optical fibres 3 and 4 which are fixed to the aligning member 52; and so that the permanent magnets 31a and 31b are opposite to each other and the permanent magnets 32a and 32b are opposite to each other while the oppositely aligned poles have opposite polarities respectively. Further, the permanent magnets 31a and 32a have the same magnetic direction and the permanent magnets 31b and 32b have the same magnetic direction.

The third and the fourth optical fibre 3 and 4 are fixed fibres, which are inserted into a square hole 53 bored in a centre of the aligning member 52 in the same direction, and fixed along respectively two interior angles of the square hole that are opposite to each other. A pair of tips of the first and the second optical fibre 1 and 2 inserted in a direction opposite to that for the third and the fourth fibre 3 and 4 are aligned opposite with the pair of tips of the third and the fourth optical fibre 3 and 4 at predetermined intervals along the interior angles of the square hole 53. Further, the supporting member 51 is aligned so that a plane, including a portion of the first and the second optical fibre 1 and 2 that is fixed to the supporting member 51, is vertical to the plane including the fixed portions of the third and the fourth optical fibre 3 and 4.

The hollow solenoid coil 21 and 22 are wound around a core material 71. The supporting member 51 and the alignment member 52 are pressed against the core material 71 and fixed thereto, thereby fixing a predetermined space left for the pair of tips of the first and the second optical fibre 1 and 2 and the pair of tips of the third and the fourth optical fibre 3 and 4 which are previously fixed in predetermined lengths.

Next, operation of the switch will be explained. The two adjacent pairs of permanent magnets 31a and 31b, and 32a and 32b are aligned so that the permanent magnets 31a and 31b have the same magnetic directions as the permanent magnets 32a and 32b respectively. In this state, if a driving current is applied to both terminals of the hollow solenoid coil 21 and a driving current of an opposite direction flows to both terminals of the hollow solenoid coil 22, the two magnetic bodies 11 and 12 are magnetised in opposite directions to each other. For instance, the first optical fibre 1 is attracted toward the permanent magnet 31a while the second optical fibre 2 is attracted toward the permanent magnet 32b. In such a manner, the pair of movable optical fibres 1 and 2 usually move to opposite directions to each other. The first and the second optical fibre 1 and 2 which are attracted by the permanent magnets in opposite directions to each other are pressed against an interior surface of the square hole 53 provided in the alignment material 52, stably along the interior angles of the square hole 53. Further, each of the fibres 1 and 2 oppositely connect with either of the third and the fourth optical fibre 3 and 4 with a predetermined gap.

If the directions of the driving currents flowing through the hollow solenoid coils 21 and 22 are changed respectively, the directions of the magnetic fields generated from the hollow solenoid coils 21 and 22 invert respectively and the magnetic bodies 11 and 12 are magnetised in opposite directions respectively, whose polarities invert respectively. Due to the above, the first and the second optical fibre 1 and 2 are attracted toward the permanent magnets on opposite sides respectively and, each of them connects with one of the optical fibres 3 and 4 that has not been connected with it previously. A driving current flows through the hollow solenoid coils 21 and 22 only when an optical path is switched. A latching state can be maintained by operation that the two magnetic bodies 11 and 12 which are magnetised when driving currents are applied are attracted toward the permanent magnets 31a, 31b, 32a and 32b respectively. It goes without saying that the directions in which the hollow solenoid coils 21 and 22 are wound, the direction of the driving currents which are applied to both terminals and, the polarities of the pairs of permanent magnets 31a and 31b, and 32a and 32b are not limited to those in this embodiment.

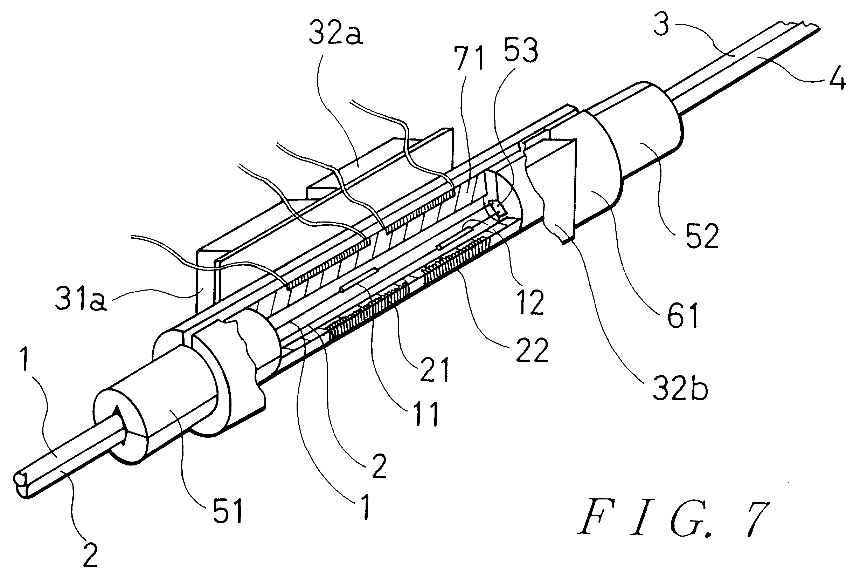

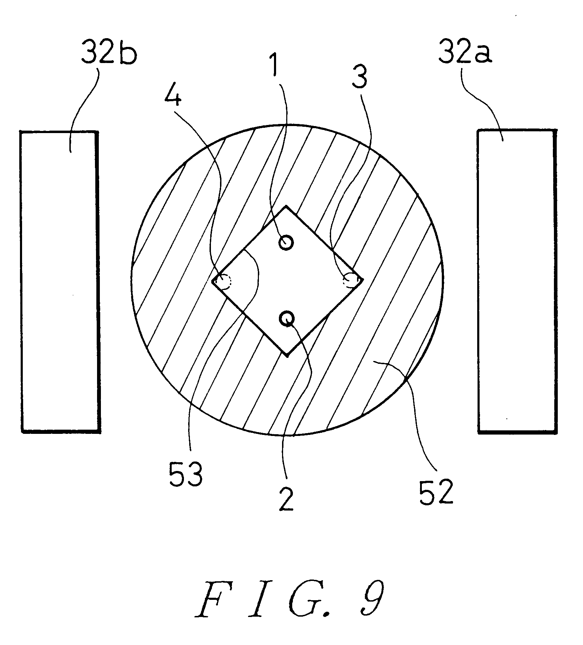

Fig. 9 is a sectional view showing the alignment member 52 that is cut vertically in a lengthways direction at an opposite connecting portion of the first and the second optical fibre 1 and 2, and the third and the fourth optical fibres 3 and 4 in a state that a magnetic field is not applied in Fig. 7.

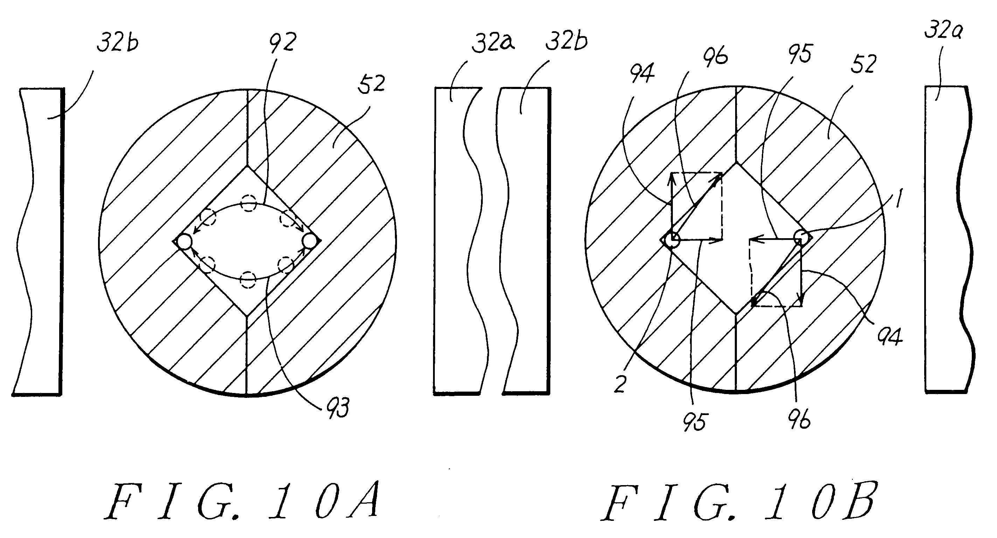

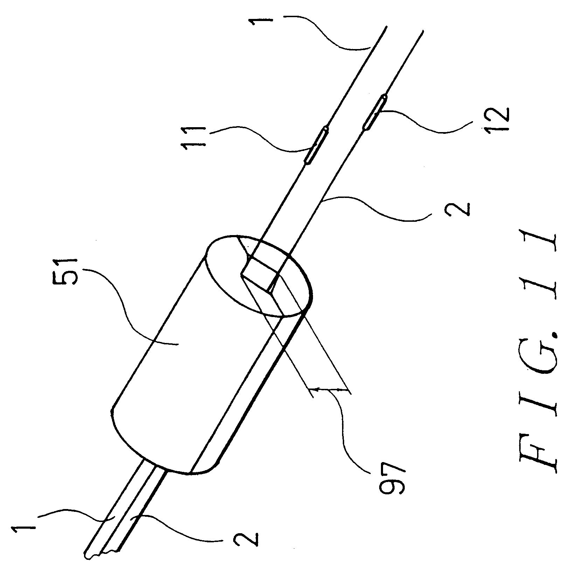

Fig. 10(a) shows the alignment member 52 and the square hole 53 seen at the same cutting plane as that in Fig. 9, but from the side of the third and the fourth optical fibres 3 and 4. Lines 92 and 93 represent the loci of the first and the second optical fibres 1 and 2 which move during the switching operation respectively. The base portions of the first and the second optical fibre 1 and 2 are secured to the supporting member in a space 97 as shown in Fig 11. The space 97 is required to be larger than an outside diameter of the magnetic bodies 11 and 12. Therefore, a force 94 acting on the fibres for maintaining the space always acts on the first and the second optical fibre 1 and 2 as shown in Fig. 10(b). During the switching operation, the first and the second optical fibre 1 and 2 tend to move in a direction of a resultant force 96 which is the addition of the force 94 and a force 95 caused by the attraction of the permanent magnets 32a and 32b. This tendency prevents the first and the second optical fibre 1 and 2 from colliding with each other and entwining with each other even during the switching operation. Further, Fig. 10(b) shows when the switching operation begins from a state that the first and the third optical fibre 1 and 3 are oppositely connected and the second and the fourth optical fibre 2 and 4 likewise.

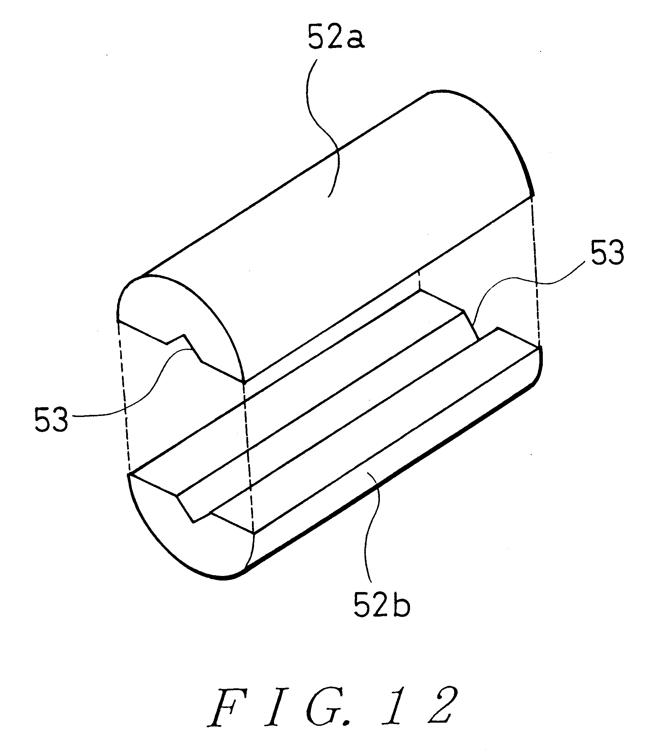

Fig. 12 is an example of the alignment member 52. As shown in Fig. 12, a V-shaped groove with a base angle of 90° is made in the centre of each of the plane portions of semicolumnar members 52a and 52b when the plane portions of the two semicolumnar members 52a and 52b are combined contiguously, an accurate square hole 53 is formed and it becomes easier to fix the optical fibres.

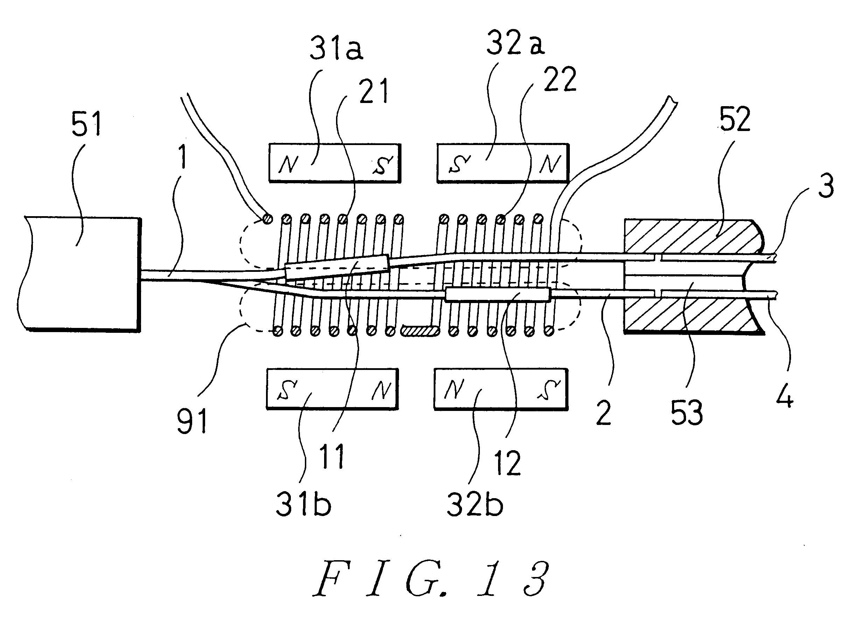

Figures 13, 14 and 15 show the second embodiment of the present invention.

The second embodiment includes the following elements: a supporting member 51 to which base portions of a first and a second optical fibre 1 and 2 are fixed in a cantilever form, magnetic bodies 11 and 12 being adhered to the optical fibres 1 and 2 respectively; hollow solenoid coils 21 and 22 for inverting the magnetic poles at both ends of the magnetic bodies 11 and 12; two pairs of permanent magnets 31a and 31b, and 32a and 32b giving magnetic attraction to the magnetic bodies 11 and 12; and a cylindrical sleeve 61 for aligning and maintaining an alignment member 52 that fixes a third and a fourth fibre 3 an 4 to a square hole 53 in the centre thereof, and fixing these elements together. The two movable optical fibres, that is the first and the second optical fibre 1 and 2, the magnetic bodies 11 and 12, the two fixed optical fibres, that is, the third and the fourth optical fibre 3 and 4, the supporting member 51, the alignment member 52 and a core material 71 have the same structure and are aligned in the same way as those of the 2X2 optical switch the first embodiment.

Magnetic bodies 11 and 12 are adhered in the vicinity of tips of the first and the second optical fibre 1 and 2 respectively, and are aligned in displaced positions so that one of them is not on top of the other in a lengthways direction of the optical fibres 1 and 2 respectively. That is, the magnetic body 11 is within the magnetic field of the pair of the permanent 31a and 31b, and the magnetic body 12 is within the magnetic field of the other pair of the permanent magnets 32a and 32b.

The hollow solenoid coils 21 and 22 are wound in the same direction, are composed of one continuous line, and are aligned so as to surround both the magnetic bodies 11 and 12. Due to such a structure, the magnetic bodies 11 and 12 are magnetised in the same direction.

The pairs of permanent magnets 31a and 31b, and 32a and 32b are aligned so that the magnetic polarities of both pairs are approximately in parallel with the optical fibres 1 and 2. Thus, the magnetic lines generated between the permanent magnets 31a and 31b, and 32a and 32b respectively are approximately in parallel with a plane including portions of the third and the fourth optical fibre 3 and 4 that are fixed to the alignment member 52. Moreover that permanent magnets 31a and 31b are opposite to each other and the permanent magnets 32a and 32b are opposite to each other while oppositely aligned poles have opposite polarities respectively. Further, the permanent magnets 31a and 32a have the opposite magnetic directions and the permanent magnets 31b and 32b have the opposite magnetic directions.

Next, operation of the switch will be explained.

The two adjacent pairs of permanent magnets 31a and 31b, and 32a and 32b are aligned so that the permanent magnets 31a and 31b have the opposite magnetic directions to that of the permanent magnetic 32a and 32b respectively. In this state, if a driving current flows to the hollow solenoid coils 21 and 22, the two magnetic bodies 11 and 12 are magnetised in the same direction. For instance, the first optical fibre 1 is attracted toward the permanent magnet 31a while the second optical fibre 2 is attracted toward the permanent magnet 31b. In such a manner, the pair of movable optical fibres 1 and 2 usually move in the opposite direction to each other. The first and the second optical fibre 1 and 2 which are attracted by the permanent magnets in opposite directions to each other are pressed against an interior surface of the square hole 53 provided in the aligning material 52, are stably along the interior angles of the square hole 53, and are oppositely connected with either of the third or the fourth optical fibre 3 and 4 respectively with a predetermined gap therebetween.

If the direction of the driving currents flowing through the hollow solenoid coils 21 and 22 are changed respectively, the direction of the magnetic fields generated from the hollow solenoid coils 21 and 22 invert respectively and the magnetic bodies 11 and 12 are magnetised in opposite directions respectively, whose polarities invert respectively. Due to the above, the first and the second optical fibre 1 and 2 are attracted toward the permanent magnets on opposite sides respectively. Thus, each of the optical fibres 1 and 2 is connected with one of the third or the fourth optical fibre 3 and 4 which has previously not been connected with it. In this embodiment, either of two separate coils or one continuous coil can be used as the hollow solenoid coils 21 and 22.

Moreover, this embodiment is also of a latching type switch in which a driving current flows through the hollow solenoid coils 21 and 22 only when an optical path is switched as well as in the first embodiment of the 2X2 optical switch.

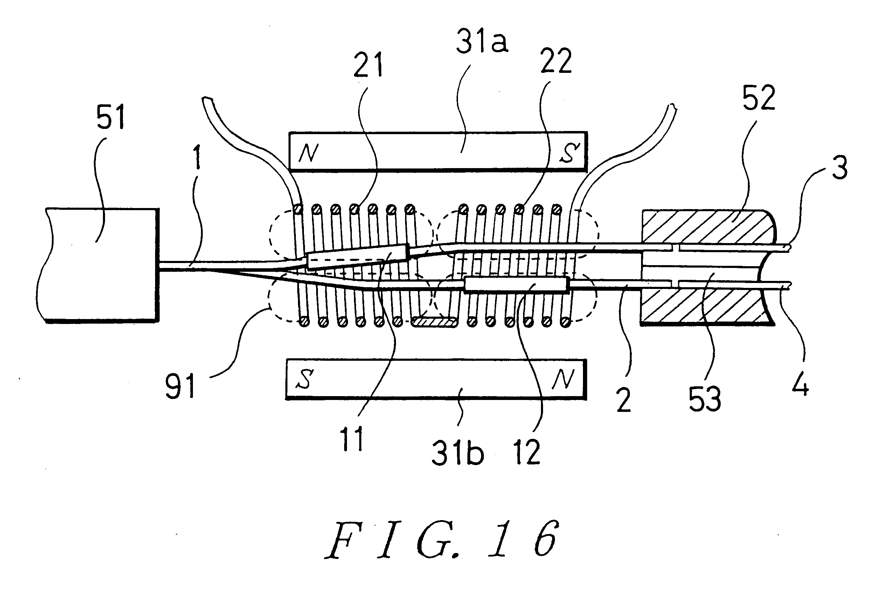

Figs. 16, 17 and 18 show a third embodiment of the 2X2 optical switch of the present invention.

The third embodiment includes the following elements: a supporting member 51 to which base portions of a first and a second optical fibre 1 and 2 are fixed in a cantilever form, magnetic bodies 11 and 12 being adhered to the first and the second optical fibre 1 and 2 respectively; hollow solenoid coils 21 and 22 for inverting magnetic poles of both terminals of the magnetic bodies 11 and 12 respectively; a pair of permanent magnets 31a and 31b for applying magnetic attraction to the magnetic bodies 11 and 12; and a cylindrical sleeve 61 for aligning and holding an alignment member 52 that fixes the third and the fourth optical fibre 3 and 4 in a square hole 53 in the centre thereof, and for fixing these elements. The two movable optical fibres, that is, the first and the second optical fibre 1 and 2; the magnetic bodies 11 and 12; the two fixed fibre 3 and 4; the supporting member 51; the alignment member 52; and the core material 71 have the same structure and are aligned in the same way as those disclosed in the first embodiment of the 2X2 optical switch.

The magnetic bodies 11 and 12 are adhered in the vicinity of the tips of the optical fibres 1 and 2 respectively and are in such positions that they are surrounded by the hollow solenoid coils 21 and 22 respectively. Both the magnetic bodies 11 and 12 are within the magnetic fields of the pairs of permanent magnets 31a and 31b.

Further, the hollow solenoid coils 21 and 22 are wound in opposite directions, are inverted at the middle of the two coils, and are made of one continuous line. In other words, when a driving current flows through the hollow solenoid coils 21 and 22, the magnetic bodies 11 and 12 are magnetised in opposite directions to each other.

The pair of permanent magnets 31a and 31b are oppositely aligned so that their magnetic poles are approximately in parallel with the optical fibres 1 and 2 respectively. Thus, the magnetic lines generated between the permanent magnets 31a and 31b are approximately in parallel with a plane including portions of the third and the fourth optical fibre 3 and 4 fixed to the alignment member 52, and the oppositely aligned poles have opposite polarities to each other.

Next, operation of the switch will be explained.

The pair of permanent magnets 31a and 31b are aligned so as to have opposite polarities to each other. When a driving current flows through the hollow solenoid coils 21 and 22, the two magnetic bodies 11 and 12 are magnetised in opposite directions to each other. For instance, the first optical fibre 1 is attracted toward the permanent magnet 31a and the second optical fibre 2 is attracted toward the permanent magnet 31b. In such a manner, the pair of movable optical fibres 1 and 2 always move in opposite directions to each other. The first and the second optical fibre 1 and 2 attracted by the permanent magnets of opposite directions to each other are pressed against an interior surface of the square hole 53 of the alignment member 52 and become stable at an interior angle of the square hole 53. Also each of the fibres 1 and 2 is oppositely connected with either of the third or the fourth optical fibre 3 or 4 with a predetermined gap provided therebetween.

When the direction of the driving current that flows through the hollow solenoid coils 21 and 22 is changed, the direction of the magnetic field generated from the hollow solenoid coils 21 and 22 is inverted. The magnetic bodies 11 and 12 are magnetised in directions opposite to the previous ones respectively and their polarities are inverted. Then, each of the first and the second optical fibre 1 and 2 is attracted by the other permanent magnet than the previous one, and each of them is connected to the other of the third and the fourth optical fibre 3 and 4 that has previously not been connected with it. The pair of permanent magnets 3 la and 3 lb can be either two pairs of permanent magnets that separately attract the magnetic bodies 11 and 12 or of course a pair of permanent magnets that attract totally the magnetic bodies 11 and 12 as mentioned above.

This embodiment is also of a latching type switch in which a driving current flows through the hollow solenoid coils 21 and 22 only when an optical path is switched similar to the first embodiment of the 2X2 optical switch.

As explained above, due to the structure of the switch of the present invention, loss can be decreased compared to the conventional switch in which a plurality of 1X2 optical switches are connected. Therefore, the present invention can realise a compact 1XN optical switch and a compact 2X2 optical switch with little loss by using a single-element structure respectively.

The aforegoing description has been given by way of example only and it will be appreciated by a person skilled in the art that modifications can be made without departing from the scope of the present invention.

## Claims

1. An optical switch for switching between optical fibres (102a, 102b, 102c, 102d) comprising:
a first moveable optical fibre (101);
a first magnetic body (110b) attached to said first moveable optical fibre (101);
means (105b, 107c, 107d) for attracting or repelling said magnetic body (110b) for enabling said first moveable optical fibre to be aligned with a first or a second optical fibre (102b, 102c); characterised by
a second magnetic body (110a) attached to said first moveable optical fibre (101) and in which said attracting or repelling means (105a, 107a, 107b) enables said magnetic body to be attracted or repelled for enabling said first moveable optical fibre to be aligned with at least one further optical fibre (102a,102d).

2. An optical switch for switching between optical fibres (3,4) comprising:
a first moveable optical fibre (1);
a first magnetic body (11) attached to said first moveable optical fibre (1);
means (21, 22, 31a, 31b) for attracting or repelling said magnetic body (11) for enabling said first moveable optical fibre to be aligned with a first or a second optical fibre (3, 4); characterised by
a second moveable optical fibre (2);
a second magnetic body (12) attached to said second moveable optical fibre (2); and
in which said attracting or repelling means enables said second magnetic body (12) to be attracted or repelled for enabling said second moveable optical fibre to be aligned with the other of said first or second optical fibre (3, 4).

3. An optical switch as claimed in claim 1 or 2 in which said means for attracting or repelling comprises at least one hollow solenoid coil (105b, 21) arranged so as to surround at least the first magnetic body.

4. An optical switch as claimed in claim 3, further comprising a second hollow solenoid coil (105, 22) arranged so as to surround the second magnetic body.

5. An optical switch as claimed in any one of the preceding claims, in which said attracting or repelling means includes at least one pair of permanent magnets (107c, 107d, 31a, 31b).

6. An optical switch as claimed in claim 5, further comprising a second pair of permanent magnets (107a, 107b, 32a, 32b).

7. An optical switch as claimed in claim 6 when dependent upon claim 2 and 4, in which the first hollow solenoid coil and the second hollow solenoid are wound in a same direction, are made of one continuous line, and the first and the second pairs of permanent magnets are provided so that their polarities are opposite to each other.

8. An optical switch as claimed in claim 6 when dependent upon claim 2 and 4, in which the first hollow solenoid coil and the second hollow solenoid coil are wound in opposite directions which are inverted at a middle of the two coils, are made of a continuous line, and the first magnetic body and the second magnetic body are provided so that those magnetic bodies have a same polarity.

9. An optical switch as claimed in any one of the preceding claims in which said optical fibres (102a, 102b, 102c, 102d, 3, 4) are arranged within a hole (53) of a guiding member (104, 52), said hole having a polygon cross-section.

10. A 1X N mechanical optical switch comprising:
a movable optical fibre going through a cylindrical tube and being fixed in a cantilever form with jacket of said fibre at an end of the cylindrical tube, a plurality of magnetic bodies being adhered to said movable optical fibre in order in the optical axis line;
at least one solenoid coil provided so as to surround said magnetic bodies;
at least two pair of permanent magnets oppositely arranged in parallel with each other so as to sandwich each of said magnetic bodies and said solenoid coil therebetween;
a plurality of fixed optical fibres fixed in a columnar member so as to be opposed to the tip of said movable optical fibre with a predetermined gap; and
a cylindrical sleeve containing said movable optical fibre, said solenoid coil, said permanent magnets and said optical fibres;
wherein said fixed optical fibres are aligned at equivalent angles in the inside surface of said columnar member, and said permanent magnets are aligned at equivalent angles so as to allow said movable optical fibre face to one of said fixed optical fibres.

11. A 2X2 mechanical optical switch having a first pair of input/output ports into or from a first and a second optical fibres and a second pair of input/output ports into or from a third and a fourth optical fibres, said first and second pairs of input/output ports are oppositely provided and said first optical fibre being coupled to one of said third and fourth optical fibres, and said second optical fibre being coupled to one of said third and fourth optical fibres that is not coupled to said first optical fibre comprising:
an alignment member having a square hole bored therein, for fixing each of said third and fourth optical fibres on an opposite corner of said square hole respectively along the axis direction of said square hole and for aligning oppositely a pair of tips of said first and second optical fibres to that of said third and fourth optical fibre with a predetermined gap provided;
a supporting member for fixing thereto base portions of said first and second optical fibres in a cantilever form, aligned so that a plane including said first and second optical fibre and a plan including said third and fourth optical fibres are vertical each other;
a first magnetic body adhered in a vicinity of the tip of said first optical fibre;
a second magnetic body adhered in such a position as the second magnetic body is not overlapped lengthways with the first magnetic body, in a vicinity of the tip of the second optical fibre;
a first hollow solenoid coil arranged so as to surround the first magnetic body;
a second hollow solenoid coil arranged so as to surround the second magnetic body;
a first pair of permanent magnets oppositely arranged each other having opposite polarities each other so that said first magnetic body and said first hollow solenoid coil are sandwiched therebetween, so that a direction of a magnetic pole of said magnets is approximately in parallel with said first and second optical fibre, and so that magnetic lines generated between said first pair of permanent magnets are approximately in parallel with a plane including the third and the fourth optical fibres; and
a second pair of permanent magnets oppositely provided with opposite polarities faced each other, said second magnetic body and said second hollow solenoid coil being sandwiched therebetween, a direction of a magnetic pole being approximately in parallel with said first and second optical fibres, and magnetic lines generated between said second pair of permanent magnets being approximately in parallel with a plane including said third and fourth optical fibre.
